**Europäisches Patentamt**

**European Patent Office**

**Office européen des brevets**

(19)

(11) Veröffentlichungsnummer : **0 353 384 B1**

## (12) EUROPÄISCHE PATENTSCHRIFT

(45) Veröffentlichungstag der Patentschrift :
25.03.92 Patentblatt 92/13

(51) Int. Cl.⁵ : **B23B 31/30,** B23B 31/00

(21) Anmeldenummer : **89106003.0**

(22) Anmeldetag : **06.04.89**

(54) **Spanneinrichtung an Werkzeugmaschinen mit einem umlaufenden Spannzylinder.**

(30) Priorität : 02.08.88 DE 3826215

(43) Veröffentlichungstag der Anmeldung :
07.02.90 Patentblatt 90/06

(45) Bekanntmachung des Hinweises auf die
Patenterteilung :
25.03.92 Patentblatt 92/13

(84) Benannte Vertragsstaaten :
ES FR GB IT

(56) Entgegenhaltungen :
EP-A- 0 200 796
DE-A- 2 534 009
GB-A- 2 097 707

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**

(74) Vertreter : **Fay, Hermann, Dipl.-Phys. Dr. et al**
**Ensingerstrasse 21 Postfach 1767**
**W-7900 Ulm (Donau) (DE)**

## Beschreibung

Die Erfindung betrifft eine Spanneinrichtung an Werkzeugmaschinen, mit einem umlaufenden Spannzylinder, einem im Spannzylinder mitumlaufend angeordneten, axial verschiebbaren Spannkolben und mit einem koaxialen zylindrischen Ansatz am Spannzylinder von einem Durchmesser kleiner als der Spannkolbendurchmesser.

Spanneinrichtungen dieser Art sind beispielsweise aus der DE-OS 31 17 850 bekannt. Bei ihnen führt der Spannkolben stets denselben axialen Spannweg aus, auch wenn vom Spannvorgang her gesehen ein kürzerer Spannweg genügen würde.

Der Erfindung liegt die Aufgabe zugrunde, eine Spanneinrichtung der eingangs genannten Art so auszubilden, daß der Hub des Spannkolbens im Spannzylinder in einfacher Weise begrenzt und diese Hubbegrenzung nach Wunsch verstellt werden kann.

Diese Aufgabe wird bei einer Spanneinrichtung der eingangs genannten Art dadurch gelöst, daß der Ansatz ein koaxiales Gewinde trägt, auf dem ein Gewindering geführt ist, der in seinen Drehstellungen auf dem Ansatz feststellbar ist und in seiner dem Spannzylinder zugewandten Stirnfläche eine koaxiale hinterschnittene Ringnut aufweist, in die in Bezug auf den Gewindering axial unverstellbar, aber längs der Ringnut verschiebbar Anschlagbolzen eingehängt sind, die axial verschiebbar und abgedichtet axial die Stirnwand des Spannzylinders in den Zylinderraum vorstehen und Anschläge für den Spannkolben bilden.

Wird der Gewindering auf dem Ansatz verdreht, verstellt er sich entsprechend axial und nimmt dabei die Anschlagbolzen mit, die sich somit axial im Spannzylinder verstellen und dadurch die Hubbegrenzung für den Spannkolben ändern. Durch die Hubbegrenzung und ihre Verstellbarkeit wird erreicht, daß nicht immer der volle Spannweg des Spannkolbens ausgefahren werden muß, sondern der Spannweg auf die tatsächlich jeweils nur erforderliche Länge eingestellt und durch den kürzeren Spannweg Zeit gespart werden kann.

Eine bevorzugte Ausführungsform ist dadurch gekennzeichnet, daß die Ringnut eine auf der Innenseite des Gewinderinges liegende radiale Mündung aufweist, durch die hindurch die Anschlagbolzen mit in die Ringnut passenden hinterschnittenen Bolzenköpfen radial in die Ringnut einführbar sind. Die Anschlagbolzen sind zu mehreren so im Spannzylinder geführt, daß sie über den Zylinderumfang gleichmäßig verteilt angeordnet sind. Die Einrichtung zum Feststellen des Gewinderings auf dem Ansatz besteht zweckmäßig aus über den Umfang verteilt angeordneten, im Gewindering geführten radialen Klemmschrauben.

Zum Verstellen des Spannhubs kann der Gewindering von Hand auf dem Ansatz verdreht werden, während die Spindel der Werkzeugmaschine still steht. Es besteht aber auch die Möglichkeit, zum Verdrehen des Gewinderings auf dem Ansatz eine steuerbare Antriebseinrichtung vorzusehen, insbesondere eine motorische Antriebseinrichtung. Stattdessen kann es aber auch vorteilhaft sein, zum Verdrehen des Gewinderings auf dem Ansatz eine auf den Gewindering wirkende steuerbare Bremseinrichtung und eine den Spannzylinder um einen steuerbaren Winkel verdrehenden Antrieb vorzusehen. Zum Verdrehen des Gewinderings wird dann der Gewindering durch die Bremseinrichtung festgehalten, während der Antrieb den Spannzylinder bzw. die den Spannzylinder tragende Werkzeugmaschinenspindel um den steuerbaren Winkel verdreht, wobei dieser Winkel selbstverständlich auch mehr als und Vielfache von 360° betragen kann. Zweckmäßig wird die Anordnung im übrigen so getroffen, daß die auf den Gewindering einwirkende Antriebs- oder Bremseinrichtung über eine ein- und ausrückbare Kupplung am Gewindering angreift.

Im folgenden wird die Erfindung an einem in der Zeichnung dargestellten Ausführungsbeispiel näher erläutert; es zeigen:

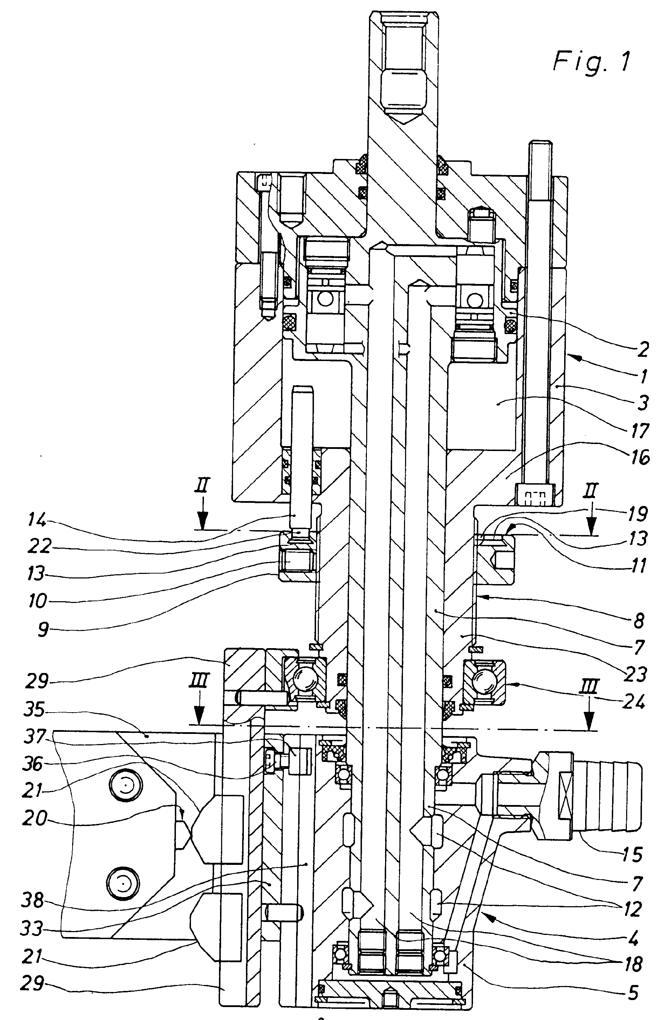

Fig. 1 einen Axialschnitt durch eine Spanneinrichtung nach der Erfindung,

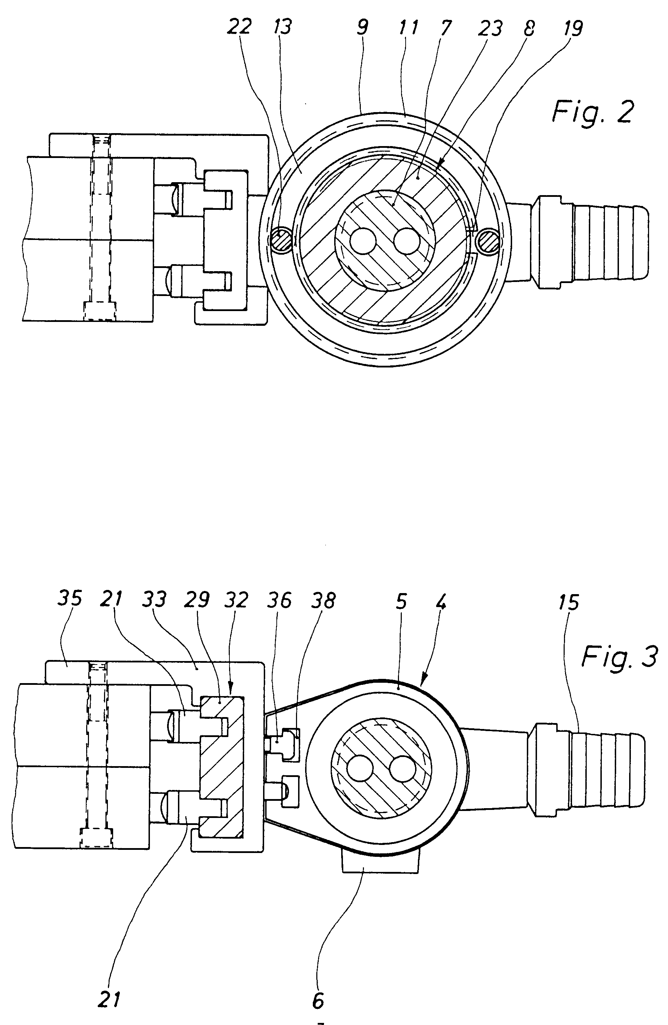

Fig. 2 den Schnitt II - II durch die Spanneinrichtung nach Fig. 1,

Fig. 3 den Schnitt in Richtung III - III durch die Spanneinrichtung nach Fig. 1.

Der in der Zeichnung dargestellte Spannzylinder 1 für Spanneinrichtungen an Werkzeugmaschinen besteht zunächst aus einem Zylindergehäuse 3 mit einem darin verschiebbaren Spannkolben 2, der an seiner in der Zeichnung rechten Seite an eine nicht dargestellte Spannstange einer ebenfalls nicht gezeigten Werkzeugmaschinenspindel angeschlossen ist. Normalerweise ist das Zylindergehäuse 3 am Ende der Werkzeugmaschinenspindel befestigt und läuft einschließlich des Spannkolbens 2 mit dieser um.

An den Spannzylinder 1 ist ein allgemein mit 4 bezeichneter Verteiler angeschlossen. Dieser Verteiler 4 besitzt ein nicht mit dem Spannzylinder 1 rotierendes Verteilergehäuse 5, das seitlich liegende Anschlüsse 6 für das den Spannzylinder 1 betätigende Arbeitsmedium trägt. Im Verteilergehäuse 5 läuft eine Verteilerwelle 7 um, auf der das Verteilergehäuse 5 drehbar gelagert und axial unverrückbar gehalten ist. Die Verteilerwelle 7 ist fest mit dem Spannkolben 2 verbunden und bei 16 axial verschiebbar in der Wand des Spannzylinders 1 gelagert. Im Ergebnis wird eine Verstellung des Spannkolbens 2 in axialer Richtung unverändert über die Verteilerwelle 7 auf das Verteilergehäuse 5 übertragen.

Die auf der Innenseite des Verteilergehäuses 5 umlaufenden Ringnuten 12 dienen zur Zu- und Abführung des Arbeitsmediums und stehen mit den Anschlüssen 6 für das Arbeitsmedium in Verbindung. Zwischen der Verteilerwelle 7 und dem Verteilergehäuse 5 durchtretendes Lecköl wird durch den Anschluß 15 abgeleitet. Die Verteilerwelle 7 besitzt zwei in den Spannzylinder 1 zu entgegen gesetzten Seiten des Spannkolbens 2 führende Wellenkanäle 18, die mit den Ringnuten 12 in Verbindung stehen. Die Steuerung des Arbeitsmediums durch die Wellenkanäle 18 wahlweise zu einer der beiden Seiten des Spannkolbens 2 erfolgt in üblicher Weise und bedarf keiner Beschreibung.

Zur Wegkontrolle der Axialverschiebung des Spannkolbens 2 ist eine Kontrolleinrichtung vorgesehen, die aus einem Berührungsschalter 20 und zwei Schaltstücken 21 mit je einer Steuerkurve zur Betätigung des Berührungsschalters 20 besteht. Der Berührungsschalter 20 ist mit dem Verteilergehäuse 5 verbunden und nimmt an dessen Axialverschiebung teil. Weiter ist am Verteilergehäuse 5 in einer Längsführung 32 ein Ausleger 29 axial verschiebbar geführt der die Schaltstücke 21 trägt. Die axiale Festlegung des Auslegers 29 erfolgt am Spannzylinder 1 mit Hilfe eines dessen Umlauf ermöglichenden Lagers 24 an einem koaxialen zylindrischen Ansatz 23 des Spannzylinders 1. Der Ausleger 29 ist in der Längsführung 32 gegen drehende Mitnahme durch den Spannzylinder 1 gesichert sowie radial zur Achse des Verteilergehäuses 5 hin abgestützt. Im einzelnen dient zur Bildung der Längsführung 32 ein am Verteilergehäuse 5 befestigter Führungskörper 33. Die Längsführung 32 ist im Profil U-förmig gestaltet. Der Führungskörper 33 ist mit einem Träger 35 für den mit dem Verteilergehäuse 5 verbundenen Berührungsschalter 20 versehen und axial verschiebbar sowie in seiner jeweiligen Verschiebungsstellung feststellbar am Verteilergehäuse 5 gehalten, wozu Klemmschrauben 36 dienen, deren Muttern als Nutsteine 37 in einer T-Nut 38 des Verteilergehäuses 5 verschiebbar sind.

Zwischen dem Lager 24 für den Ausleger 29 einerseits und dem Spannzylinder 1 andererseits trägt der Ansatz 23 ein koaxiales Gewinde 8, auf dem ein Gewindering 9 geführt ist, so daß der Gewindering 9 im Gewinde 8 verdreht und dadurch seine axiale Stellung auf dem Ansatz 23 verstellt werden kann. In seinen jeweiligen Drehstellungen kann der Gewindering 9 auf dem Ansatz 23 festgestellt werden, wozu über den Umfang verteilt angeordnete, im Gewindering 9 geführte radiale Klemmschrauben 10 dienen, die gegen den Ansatz 23 festgezogen werden können. In seiner dem Spannzylinder 1 zugewandten Stirnfläche 11 besitzt der Gewindering 9 eine koaxiale hinterschnittene Ringnut 13, in die in Bezug auf den Gewindering 9 axial unverstellbar, aber längs der Ringnut verschiebbar Anschlagbolzen 14 eingehängt sind. Diese Anschlagbolzen 14 sind axial verschiebbar in der Stirnwand 16 des Zylindergehäuses 3 geführt und abgedichtet und stehen axial durch die Stirnwand 16 des Spannzylinders 1 hindurch in den Zylinderraum 17 vor, wo sie Anschläge für den Spannkolben 2 bilden. Im Ausführungsbeispiel sind zwei solcher Anschlagbolzen 14 und drei Klemmschrauben 10 vorgesehen. Die Ringnut 13 besitzt eine auf der Innenseite des Gewinderinges 9 liegende radiale Mündung 19, durch die hindurch die Anschlagbolzen 14 mit in die Ringnut 13 passenden hinterschnittenen Bolzenköpfen 22 radial in die Ringnut 13 eingeführt, bzw. aus ihr herausgenommen werden können. Die Bolzenköpfe 22 sind axial formschlüssig in der Ringnut 13 gehalten.

Wird der Gewindering 9 auf dem Ansatz 23 verdreht und verstellt er sich dadurch axial auf dem Ansatz 23, werden die Anschlagbolzen 14 mit ihrem in der Ringnut 13 festgehaltenen Bolzenkopf 22 entsprechend mitgenommen und verschieben sich axial im Zylinderraum 17 des Spannzylinders 1, wodurch sich die Hubbegrenzung für den Spannkolben 2 entsprechend ändert.

Im Ausführungsbeispiel erfolgt das Verdrehen des Gewinderings 9 von Hand bei stillstehendem Spannzylinder 1. Es besteht aber auch die in der Zeichnung nicht dargestellte Möglichkeit, zum Verdrehen des Gewinderings 9 auf dem Ansatz 23 eine steuerbare, motorische Antriebseinrichtung oder eine auf den Gewindering wirkende steuerbare Bremseinrichtung in Verbindung mit einer den Spannzylinder 1 um einen steuerbaren Winkel verdrehenden Antrieb vorzusehen. Im letzteren Fall wird der Gewindering 9 mittels der Bremseinrichtung festgehalten, während der Antrieb den Spannzylinder 1 bzw. die ihn tragende Werkzeugmaschinenspindel um einen vorgegebenen Winkel oder vorgegebene Anzahl von Umdrehungen verdreht, was bei modernen Maschinen ohnehin (gesteuerte Drehung um die C-Achse) vorgesehen ist. Selbstverständlich muß die Bremseinrichtung dabei so beschaffen sein, daß sie den gegen Drehung gesicherten Gewindering 9 bezüglich der beim Verdrehen des Spannzylinders 1 auftretenden Axialverschiebung nicht behindert. In jedem Fall besteht die ebenfalls nicht gezeigte Möglichkeit, die auf den Gewindering 9 einwirkende Antriebs- oder Bremseinrichtung über eine ein- und ausrückbare Kupplung am Gewindering 9 angreifen zu lassen, wobei die Kupplung nur eingerückt ist, während der Gewindering 9 verdreht bzw. gebremst wird.

## Patentansprüche

1. Spanneinrichtung an Werkzeugmaschinen, mit einem umlaufenden Spannzylinder (1), einem im Spannzylinder mitumlaufend angeordneten, axial verschiebbaren Spannkolben (2) und mit einem koaxialen zylindrischen Ansatz (23) am Spannzylinder (1) von einem Durchmesser kleiner als der Spannkolbendurchmesser, dadurch gekennzeichnet, daß der Ansatz (23) ein koaxiales Gewinde (8) trägt, auf dem ein Gewindering (9) geführt ist, der in seinen Drehstellungen auf dem Ansatz (23) feststellbar ist und in seiner dem Spannzylinder (1) zugewandten Stirnfläche (11) eine koaxiale hinterschnittene Ringnut (13) aufweist, in die in Bezug auf den Gewindering (9) axial unverstellbar, aber längs der Ringnut (13) verschiebbar Anschlagbolzen (14) eingehängt sind, die axial verschiebbar und abgedichtet axial durch die Stirnwand (16) des Spannzylinders (1) in den Zylinderraum (17) vorstehen und Anschläge für den Spannkolben (2) bilden.

2. Spanneinrichtung nach Anspruch 1, dadurch gekennzeichnet, daß die Ringnut (13) eine auf der Innenseite des Gewinderinges (9) liegende radiale Mündung (19) aufweist, durch die hindurch die Anschlagbolzen (14) mit in die Ringnut (13) passenden hinterschnittenen Bolzenköpfen (22) radial in die Ringnut (13) einführbar sind.

3. Spanneinrichtung nach Anspuch 1 oder 2, dadurch gekennzeichnet, daß die Einrichtung zum Feststellen des Gewinderings (9) auf dem Ansatz (23) aus über den Umfang verteilt angeordneten, im Gewindering (9) geführten radialen Klemmschrauben (10) besteht.

4. Spanneinrichtung nach einem der Ansprüche 1 bis 3, dadurch gekennzeichnet, daß zum Verdrehen des Gewinderings (9) auf dem Ansatz (23) eine steuerbare Antriebseinrichtung vorgesehen ist.

5. Spanneinrichtung nach einem der Ansprüche 1 bis 3, dadurch gekennzeichnet, daß zum Verdrehen des Gewinderings (9) auf dem Ansatz (23) eine auf den Gewindering (9) wirkende steuerbare Bremseinrichtung und eine den Spannzylinder (1) um einen steuerbaren Winkel verdrehender Antrieb vorgesehen sind.

6. Spanneinrichtung nach Anspruch 4 oder 5, dadurch gekennzeichnet, daß die auf den Gewindering (9) einwirkende Antriebs- oder Bremseinrichtung über eine ein- und ausrückbare Kupplung am Gewindering (9) angreift.

## Revendications

1. Dispositif de serrage pour machines-outils, comprenant un cylindre de serrage tournant (1), un piston de serrage (2) également tournant disposé dans le cylindre de serrage et pouvant être déplacé dans le sens axial et, sur le cylindre de serrage (1), un embout cylindrique coaxial (23) dont le diamètre est inférieur à celui du piston de serrage, **caractérisé par le fait** que l'embout (23) porte un filetage coaxial (8) sur lequel est guidée une bague filetée (9) qui peut être bloquée dans ses positions de rotation sur l'embout (23) et dont la face frontale (11) dirigée vers le cylindre de serrage (1) présente une rainure annulaire coaxiale contre-dépouillée (13) dans laquelle sont accrochés de façon immobile dans le sens axial par rapport à la bague filetée (9) mais déplaçables le long de la rainure annulaire (13), des boulons de butée (14) qui dépassent axialement, de manière mobile dans le sens axial et étanche, de la paroi frontale (16) du cylindre de serrage (1) vers l'intérieur (17) du cylindre et forment des butées pour le piston de serrage (2).

2. Dispositif de serrage selon la revendication 1, caractérisé par le fait que la rainure annulaire (13) présente une embouchure radiale (19) située sur la face intérieure de la bague filetée (9) et par laquelle les boulons de butée (14) peuvent être engagés radialement dans la rainure annulaire (13) avec des têtes de boulon (22) contre-dépouillées adaptées à ladite rainure annulaire (13).

3. Dispositif de serrage selon l'une des revendications 1 ou 2, caractérisé par le fait que le dispositif pour le blocage de la bague filetée (9) sur l'embout (23) est constitué par des vis de serrage radiales (10) réparties sur la circonférence et guidées dans la bague filetée (9).

4. Dispositif de serrage selon l'une des revendications 1 à 3, caractérisé par le fait qu'il comprend pour la rotation de la bague filetée (9) sur l'embout (23) un mécanisme d'entraînement commandable.

5. Dispositif de serrage selon l'une des revendications 1 à 3, caractérisé par le fait qu'il comprend pour la rotation de la bague filetée (9) sur l'embout (23) un dispositif de freinage commandable qui agit sur la bague filetée (9) et un système d'entraînement qui fait tourner le cylindre de serrage (1) d'un angle prédéterminé.

6. Dispositif de serrage selon l'une des revendications 4 ou 5, caractérisé par le fait que le système d'entraînement ou de freinage agissant sur la bague filetée (9) est couplé avec ladite bague filetée (9) par l'intermédiaire d'un dispositif d'accouplement embrayable et débrayable.

## Claims

1. A clamping arrangement on machine tools, comprising a rotatable clamping cylinder (1), an axially displaceable clamping piston (2) which is arranged in the clamping cylinder rotatably therewith, and a coaxial cylindrical projection (23) on the clamping cylinder (1) of a diameter which is smaller than the diameter of the clamping piston, characterised in that the projection (23) carries a coaxial screwthread (8) on which there is guided a screwthreaded ring (9) which can be fixed in its rotary positions on the projection (23) and which in its end face (11) which is towards the clamping cylinder (1) has a coaxial undercut annular groove (13) into which abutment pins (14) are engaged in such a way as to be axially immovable in relation to the screwthreaded ring (9) but displaceable along the annular groove (13), which abutment pins project axially displaceably and in sealed relationship axially through the end wall (16) of the clamping cylinder (1) into the cylinder chamber (17) and form abutments for the clamping piston (2).

2. A clamping arrangement according to claim 1 characterised in that the annular groove (13) has a radial mouth (19) which is on the inside of the screwthreaded ring (9) and through which the abutment pins (14) can be radially introduced into the annular groove (13), with undercut pin heads (22) which fit into the annular groove (13).

3. A clamping arrangement according to claim 1 or claim 2 characterised in that the means for fixing the screwthreaded ring (9) on the projection (23) comprises radial clamping screws (10) which are arranged distributedly around its periphery and which are guided in the screwthreaded ring (9).

4. A clamping arrangement according to one of claims 1 to 3 characterised in that there is provided a controllable drive means for rotating the screwthreaded ring (9) on the projection (23).

5. A clamping arrangement according to one of claims 1 to 3 characterised in that for rotating the screwthreaded ring (9) on the projection (23) there are provided a controllable braking means acting on the screwthreaded ring (9) and a drive for rotating the clamping cylinder (1) through a controllable angle.

6. A clamping arrangement according to claim 4 or claim 5 characterised in that the drive or braking means acting on the screwthreaded ring (9) engages the screwthreaded ring (9) by way of a coupling means which can be engaged and disengaged.

Fig. 1

Fig. 2

Fig. 3